# EUROPÄISCHE PATENTANMELDUNG

(11) **EP 2 273 460 A1**
(43) Veröffentlichungstag der Anmeldung: **12.01.2011**
(21) Anmeldenummer: 10181857.3
(22) Anmeldetag: 06.09.2005
(51) Int. Cl.: G07F 7/10, G07F 7/08, G07F 19/00

(54) **Einrichtung und Verfahren zur Begrenzung eines Bezahlvorgangs mit einem Mobilfunknetz**

(30) Priorität: 08.09.2004 DE 102004043789
(62) Teilanmeldung aus: 05108150.3
(71) Anmelder: Vodafone Holding GmbH, 40213 Düsseldorf (DE)
(72) Erfinder: Schulz, Karsten, 40547 Düsseldorf (DE); Güttner, Arndt, 40547, Düsseldorf (DE)
(74) Vertreter: Weisse, Renate

(57) **Zusammenfassung**

Die Erfindung betrifft eine Einrichtung (34) und ein Verfahren zum Bezahlen von Waren bzw. Dienstleistungen (48) für einen Mobilfunkteilnehmer (16) mit einem Mobilfunkendgerät (38) über ein Mobilfunknetz (36), wobei der zu bezahlende Geldbetrag und der jeweilige Empfänger (46) über das Mobilfunkendgerät (38) an eine Bezahleinheit (40) des Mobilfunknetzes übermittelt wird, welche den gewünschten Geldbetrag an den Empfänger (46) transferiert. Die Höhe des Transferbetrags wird bis zu einem Schwellwert (14) begrenzt. Die Begrenzung erfolgt durch einen Schwellwertfilter (42).

## Beschreibung

### Technisches Gebiet

Die Erfindung betrifft eine Einrichtung und ein Verfahren zum Bezahlen von Waren bzw. Dienstleistungen für einen Mobilfunkteilnehmer mit einem Mobilfunkendgerät über ein Mobilfunknetz, wobei der zu bezahlende Geldbetrag und der jeweilige Empfänger über das Mobilfunkendgerät an eine Bezahleinheit des Mobilfunknetzes übermittelt wird, welche den gewünschten Geldbetrag an den Empfänger transferiert.

### Stand der Technik

Kostenpflichtige Produkte oder Dienstleistungen, die ein Verbraucher ersteht, werden üblicherweise mit Geld bezahlt. Der Zahlungsvorgang erfolgt vom Käufer zum Verkäufer als Zahlungsempfänger beispielsweise bar, per Scheck, mit Kredit- oder Scheckkarte. Immer häufiger findet auch das Lastschriftverfahren seine Anwendung.

Eine weitere Zahlungsmethode bietet neuerdings das Mobilfunknetz, wie es beispielsweise in der deutschen Offenlegungsschrift DE 102 29 619 A1 beschrieben wird. Der Zahlungsverkehr für die Waren oder Dienstleistungen wird dabei über ein Mobilfunkendgerät getätigt. Durch Eingabe einer Geheimnummer wird eine Abwicklungsstelle des Mobilfunknetzbetreibers autorisiert, dem Zahlungsempfänger einen bestimmten Betrag auszuzahlen. Dem Käufer wird dieser Betrag schließlich, beispielsweise über seine Mobilfunkabrechnung, in Rechnung gestellt, bzw. direkt von seinem Bankkonto abgebucht.

Problem bei diesem Verfahren ist, dass die auszuführenden Zahlungen durch die Abwicklungsstelle überprüft werden müssen, ob der Betrag auszuzahlen ist oder ob ein vereinbartes Zahlungsvolumen überschritten wird, bzw. der Zahlungsvorgang einen Verfügungsrahmen überschreitet, was den Zahlungsvorgang verhindern könnte. Dieser Vorgang muss bei jeder auszuführenden Zahlung erfolgen. Dies ist zeitaufwendig und verhindert eine zügige Abwicklung des Zahlungsvorgangs. Es hat sich ferner als nachteilig herausgestellt, dass für jeden Zahlungsvorgang umständlich eine Geheimnummer durch den Verbraucher zur Autorisierung des Zahlungsvorgangs eingegeben werden muss.

### Offenbarung der Erfindung

Aufgabe der Erfindung ist es daher, die Nachteile des Standes der Technik zu beseitigen und eine Einrichtung zum Bezahlen von Waren bzw. Dienstleistungen für einen Mobilfunkteilnehmer mit einem Mobilfunkendgerät über ein Mobilfunknetz zu schaffen, bei dem auch ohne speziellen Code, wie PIN oder TAN bezahlt werden kann. Es ist ferner Aufgabe der Erfindung ein Verfahren zu schaffen, welches es ermöglicht ohne zusätzlichen Code, wie PIN oder TAN mit einem Mobilfunkendgerät Waren oder Dienstleistungen zu bezahlen.

Erfmdungsgemäß wird die Aufgabe dadurch gelöst, daß bei einer Einrichtung der eingangs genannten Art zum Bezahlen von Waren bzw. Dienstleistungen für einen Mobilfunkteilnehmer mit einem Mobilfunkendgerät über ein Mobilfunknetz, wobei der zu bezahlende Geldbetrag und der jeweilige Empfänger über das Mobilfunkendgerät an eine Bezahleinheit des Mobilfunknetzes übermittelt wird, welche den gewünschten Geldbetrag an den Empfänger transferiert, einen Schwellwertfilter aufweist, welcher die Bezahleinheit derart steuert, um Geldbeträge nur bis zu einem Schwellwert zu transferieren.

Weiterhin wird die Aufgabe durch ein Verfahren der eingangs genannten Art zum Bezahlen von Waren bzw. Dienstleistungen für einen Mobilfunkteilnehmer mit einem Mobilfunkendgerät über ein Mobilfunknetz, wobei der zu bezahlende Geldbetrag und der jeweilige Empfänger über das Mobilfunkendgerät an eine Bezahleinheit des Mobilfunknetzes übermittelt wird, welche den gewünschten Geldbetrag an den Empfänger transferiert, wobei ein Schwellwert festgelegt wird, bis zu dessen Höhe die Bezahleinheit Geldbeträge transferiert.

Die Erfindung beruht auf dem Prinzip, einen Schwellwert bei einem Schwellwertfilter einzustellen, der die Auszahlung von Beträgen, die über diesem Wert liegen verhindern. Da der Mobilfunkteilnehmer sich üblicherweise ohnehin mit seinem Mobilfunkendgerät mittels SIM-Karte und PIN im Mobilfunknetz identifizieren muss, erscheint es gerade bei kleineren Beträgen unangemessen einen Zahlungsvorgang zusätzlich zu autorisieren. Der Missbrauch durch unautorisierte Personen, beispielsweise bei Verlust eines eingeschalteten Mobilfunkendgeräts, wird durch einen solchen Schwellwert minimiert. Der Schaden kann daher so gering wie möglich, d.h. auf kleinste Beträge, gehalten werden. Damit kann ohne zusätzliche Überprüfung der zu transferierenden Beträge bzw. der Bonität, beispielsweise durch eine Abwicklungsstelle, ein Zahlungsvorgang erfolgen. Durch einen solchen Schwellwertfilter können Zahlungsvorgänge beschleunigt und ggf. einfacher automatisiert werden, weil keine menschliche Person ihr "OK" für den Zahlungsvorgang geben muss.

In einer vorteilhaften Ausgestaltung der erfindungsgemäßen Einrichtung kann der Schwellwert des Schwellwertfilters individuell für jeden Mobilfunkteilnehmer einstellbar ausgebildet sein. Durch diese Maßnahme kann für jeden Mobilfunkteilnehmer individuell das Risiko festgelegt werden. Gefährdeten Personen, wie Kindern und Jugendlichen, oder Leuten mit geringer Bonität wird man wahrscheinlich einen sehr geringen Schwellwert einstellen. Bei anderen Personen kann der Schwellwert je nach Bedarf höher gesetzt werden. Dabei wird es wahrscheinlich auch darauf ankommen, wer das Haftungsrisiko bei einem möglichen Missbrauch trägt.

Vorzugsweise ist der Schwellwertfilter in der Bezahleinheit der erfmdungsgemäßen Einrichtung vorgesehen. Als integraler Bestandteil der Bezahleinheit sind kurze Übermittlungswege für die anfallenden Daten gewährleistet, wodurch ein schneller Zahlvorgang erfolgen kann.

Eine bevorzugte Ausbildung der erfindungsgemäßen Einrichtung ergibt sich durch Stellmittel, welche den Schwellwert des Schwellwertfilters auf verschiedene Stufen anheben bzw. absenken kann. Damit kann jederzeit der Schwellwert des Schwellwertfilters individuell je nach Bedarf angehoben oder abgesenkt werden. Damit das Anheben bzw. Absenken nicht missbräuchlich vorgenommen werden kann, sind die Stellmittel Code-, vorzugsweise PIN- und/oder TAN- gesteuert ausgebildet. Die Einstellung des Schwellwerts im Schwellwertfilter kann durch diese Maßnahme ggf. auch durch den Mobilfunkteilnehmer zumindest in einem gewissen Rahmen selbst vorgenommen werden.

Eine weitere bevorzugte Ausgestaltung der erfindungsgemäßen Einrichtung liegt vor, wenn die Identifikationsmittel vorgesehen sind, die den Mobilfunkteilnehmer im Mobilfunknetz eindeutig identifizieren und authentifizieren. Vorzugsweise sind diese Identifikationsmittel als SIM-Karte ausgebildet. Die SIM-Karten sind jeweils, bereits durch ihre Herstellung festegelegt, einmalig. Sie werden daher von den Mobilfunkbetreibern individuell zur Identifikation im Mobilfunknetz ausgegeben. Eingesetzt in ein Mobilfunkendgerät lassen sich in Kombination mit einer PIN (= Personal Identification Number) die Mobilfunkteilnehmer eindeutig im Mobilfunknetz identifizieren. Der Bezahlvorgang lässt sich auf diese Weise eindeutig zuordnen.

Bei einigen Mobilfunkteilnehmern, deren Bonität außer Frage steht, erscheint es nicht sinnvoll, einen Schwellwertfilter vorzusehen. Durch Mittel zum Aktivieren bzw. Deaktivieren des Schwellwertfilters kann in einer weiteren besonderen Ausgestaltung der erfindungsgemäßen Einrichtung der Schwellwert ein bzw. vollständig ausgeschaltet werden.

Da es sich hierbei um ein sicherheitsrelevante Frage handelt, bei der viel finanzieller Schaden zugefügt werden kann, sind die Mittel zum Aktivieren bzw. Deaktivieren des Schwellwertfilters in einer weiteren bevorzugten Ausbildung der erfindungsgemäßen Einrichtung Code-, vorzugsweise PIN- und/oder TAN- gesteuert ausgebildet.

Ein vorteilhafter Aspekt des erfmdungsgemäßen Verfahrens zum Bezahlen von Waren bzw. Dienstleistungen mit einem Mobilfunkendgerät über ein Mobilfunknetz ergibt sich entsprechend zur erfindungsgemäßen Einrichtung dadurch, dass nunmehr der Schwellwert für jeden Mobilfunkteilnehmer individuell eingestellt wird. Durch diese Maßnahme kann für jeden Mobilfunkteilnehmer individuell das Risiko festgelegt werden. Je nach Bedarf kann der Schwellwert dann höher oder niedriger angesetzt werden.

Als vorteilhafte Ausgestaltung des erfmdungsgemäßen Verfahrens erweist sich ferner, wenn der Schwellwert auf verschiedene Stufen angehoben bzw. abgesenkt wird. Damit lässt sich die Höhe des Schwellwerts geeignet festlegen. Zur Sicherung des Vorgangs zum Einstellen des Schwellwerts wird dieser in einer bevorzugten Ausbildung des erfindungsgemäßen Verfahrens jeweils durch eine PIN- und/oder eine TAN- angepasst.

Weitere Vorteile ergeben sich aus dem Gegenstand der Unteransprüche.

### Kurze Beschreibung der Zeichnung

- Fig. 1: zeigt in einer Prinzipskizze ein Diagramm für Bezahlvorgänge mit einem Schwellwert.
- Fig. 2: zeigt in einer Prinzipskizze eine erfindungsgemäße Einrichtung mit einem Schwellwertfilter.

### Bevorzugtes Ausführungsbeispiel

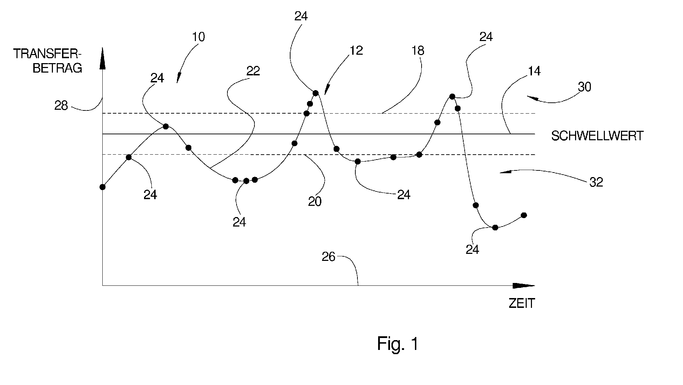

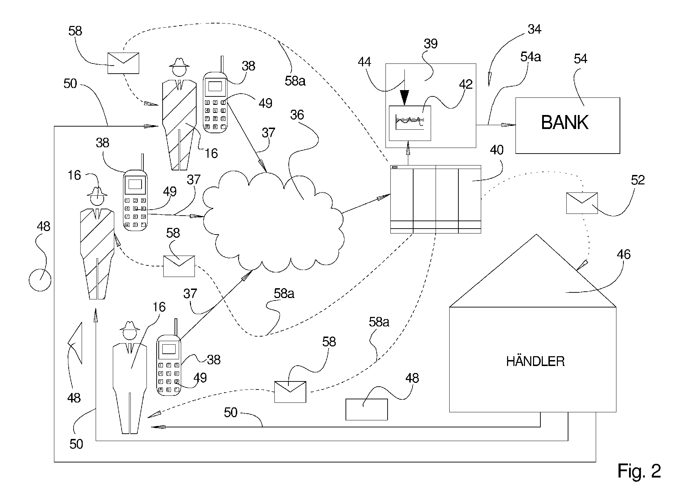

In Fig. 1 wird in einer Prinzipskizze ein Diagramm 10 für Zahlungsvorgänge 12 dargestellt. Mit 14 wird ein Schwellwert bezeichnet. Der Schwellwert 14 wird individuell für einen Mobilfunkteilnehmer 16 (vgl. Fig. 2) oder für eine Gruppe von Mobilfunkteilnehmern 16 festgelegt. Der Schwellwert 14 kann individuell bei Bedarf angehoben werden, wie gestrichelte Linie 18 zeigt, oder abgesenkt werden, gestrichelte Linie 20.

Kurve 22 stellt beispielhaft die Transferbeträge 24 eines Mobilfunkteilnehmers 16 dar, die über den Mobilfunkbetreiber abgerechnet werden sollen. Die Transferbeträge 24 sind dazu als Punkte dargestellt, die über eine Zeitachse 26 (Abszisse) aufgetragen wurden und zur Übersichtlichkeit mit einer Linie zur Kurve 22 verbunden sind. Ordinate 28 bildet die Höhe der Transferbeträge 24 ab. Überschreitet ein Transferbetrag 24a den Schwellwert 14, in Bereichen 30, wird der jeweilige Geldbetrag nicht transferiert. Alle übrigen Beträge, die unterhalb des Schwellwertes 14 im Bereich 32 liegen, werden angewiesen.

Anhand von Fig. 2 soll beispielhaft ein Ausführungsbeispiel der erfindungsgemäßen Einrichtung 34 bzw. des erfindungsgemäßen Verfahrens erläutert werden. Fig. 2 zeigt dazu in einer Prinzipskizze die erfindungsgemäße Einrichtung 34. Die erfindungsgemäße Einrichtung 34 umfasst ein Mobilfunknetz 36, in dem die Mobilfunkteilnehmer 16 mit Mobilfunkendgeräten 38 kommunizieren, insbesondere Daten austauschen können, Pfeile 37. Das Mobilfunknetz 36 ist bereits ausführlich in Literatur beispielsweise zum Standard von GSM bzw. UMTS, wie "GSM Global System for Mobile Communication, von Prof. Dr.-Ing. Jörg Eberspächer und Dipl.-Ing. Hans-Jörg Vögel, 2. Auflage Suttgart; Leipzig: Teubner 1999", beschrieben, weshalb hierauf nicht näher eingegangen werden muss.

Das Mobilfunknetz 36 eines Mobilfunkbetreibers umfasst eine zentrale Verwaltungs- und ggf. auch Vermittlungseinheit. Diese zentrale Verwaltungs- und ggf. auch Vermittlungseinheit besteht vorzugsweise aus einem zentralen rechnergesteuerten Server 40 bzw. Serversystem. Über den Server 40 werden insbesondere Verbindungs- und Abrechnungsdaten verwaltet und überwacht. Der Server 40 weist dazu eine Bezahleinheit 39 auf, welche die Zahlungsvorgänge zwischen Mobilfunknetzbetreiber und Bank 54 abgewickelt. Die Bezahleinheit 39 enthält wiederum einen Schwellwertfilter 42. Der Schwellwert 14 dieses Schwellwertfilters 40 kann mittels Stellschalter 44 individuell für jeden Mobilfunkteilnehmer 16 eingestellt werden.

Beispielhaft ist in dieser Figur ein Händler 46 dargestellt, der Waren und/oder Dienstleistungen 48 vertreibt. Die Mobilfunkteilnehmer 16 können bei diesem Händler Waren bzw. Dienstleistungen 48 kaufen. Pfeile 50 deuten den Kauf an. Zum Bezahlen wird jeweils das Mobilfunkendgerät 38 herangezogen. Der Mobilfunkteilnehmer 16 gibt dazu den Betrag über Tastatur 49 ein, der das jeweilige Produkt kostet und übermittelt diesen neben einer Kennung des Händlers an den Server 40 des Mobilfunkbetreibers. Der Händler 46 hat seine Bankverbindung und sonst erforderliche Daten zur Teilnahme an diesem Verfahren bei dem Mobilfunkbetreiber hinterlegt. Der Mobilfunkteilnehmer 16 selbst ist über seine SIM-Karte, welche in das Mobilfunkendgerät 38 eingesetzt werden muss, bereits beim Einbuchen in das Mobilfunknetz 36 eindeutig für den Mobilfunkbetreiber identifiziert.

Der Server 40 überprüft nun mittels des Schwellwertfilters 42, ob der angegebene Betrag an den entsprechenden Händler 46 überwiesen werden kann. Liegt der Betrag über dem zuvor eingestellten Schwellwert 14, erfolgt keine Transferierung des für den Kauf erforderlichen Geldbetrags an den Händler 46. Dieser erhält stattdessen eine Mitteilung 52 vom Mobilfunkbetreiber, beispielsweise auch als SMS, MMS oder E-Mail, dass der Kunde nicht über diesen Betrag verfügen kann. Der Händler 46 wird dann die Ware 48 nicht ausliefern bzw. Dienstleistung 48 nicht ausführen.

Liegt der Betrag unterhalb des Schwellwerts 14, kann die Überweisung des Betrags auf das Konto des Händlers 46 als Zahlungsempfänger erfolgen. Der Mobilfunkbetreiber veranlasst mit der Bezahleinheit 54 den Geldtransfer beispielsweise über die Bank 54, Pfeil 54a. Dieser Vorgang kann weitestgehend automatisiert werden. Die Abrechnung des Geldbetrages mit dem Mobilfunkteilnehmer 16 wird über Rechnung 58 des Mobilfunkbetreibers durchgeführt, was mit gestrichelten Linien 58a angedeutet wird.

Dem Mobilfunkteilnehmer 16 wird eine entsprechende Mitteilung, beispielsweise über SMS geschickt, in der ihm die erfolgreiche Transaktion mitgeteilt wird.

Der Schwellwert 14 kann, wie zur Beschreibung von Fig. 1, mit dem Stellschalter 44 des Schwellfilters 42 angehoben oder abgesenkt werden. Je nach Mobilfunkteilnehmer 16 kann der Schwellwert 14 individuell mit dem Schwellwertfilter 42 eingestellt werden. Der Schwellwert 14 kann dabei auch für mehrere Mobilfunkteilnehmer 16, als Gruppe eingestellt werden. Eine Gruppe wird beispielhaft von den beiden schraffierten Mobilfunkteilnehmern 16 gebildet. Der Schwellwert 14 kann ggf. durch den Mobilfunkteilnehmer 14 selbst in einem gewissen Rahmen variiert werden. Dies wird über eine PIN (= Personal Identification Number) abgesichert, so dass die Änderung des Schwellwerts nur von einer befugten Person vorgenommen werden kann.

## Patentansprüche

1. Einrichtung (34) zum Bezahlen von Waren bzw. Dienstleistungen (48) für einen Mobilfunkteilnehmer (16) mit einem Mobilfunkendgerät (38) über ein Mobilfunknetz (36), wobei der zu bezahlende Geldbetrag und der jeweilige Empfänger (46) über das Mobilfunkendgerät (38) an eine Bezahleinheit (39) des Mobilfunknetzes (36) übermittelt wird, welche den gewünschten Geldbetrag an den Empfänger (46) transferiert, **gekennzeichnet durch** einen Schwellwertfilter (42), welcher die Bezahleinheit (39) derart steuert, um Geldbeträge nur bis zu einem Schwellwert (14) zu transferieren.

2. Einrichtung (34) zum Bezahlen von Waren bzw. Dienstleistungen (48) mit einem Mobilfunkendgerät (38) über ein Mobilfunknetz (36) nach Anspruch 1, **dadurch gekennzeichnet, dass** der Schwellwert (14) des Schwellwertfilters (42) individuell für jeden Mobilfunkteilnehmer (16) einstellbar ausgebildet ist.

3. Einrichtung (34) zum Bezahlen von Waren bzw. Dienstleistungen (48) mit einem Mobilfunkendgerät (38) über ein Mobilfunknetz (36) nach einem der Ansprüche 1 oder 2, **dadurch gekennzeichnet, dass** der Schwellwertfilter (42) in der Bezahleinheit (40) vorgesehen ist.

4. Einrichtung (34) zum Bezahlen von Waren bzw. Dienstleistungen (48) mit einem Mobilfunkendgerät (38) über ein Mobilfunknetz (36) nach einem der Ansprüche 1 bis 3, **gekennzeichnet durch** Stellmittel (44), welche den Schwellwert (14) des Schwellwertfilters (14) auf verschiedene Stufen anheben bzw. absenken.

5. Einrichtung (34) zum Bezahlen von Waren bzw. Dienstleistungen (48) mit einem Mobilfunkendgerät (38) über ein Mobilfunknetz (36) nach Anspruch 4, **dadurch gekennzeichnet, dass** die Stellmittel (44) Code-, vorzugsweise PIN- und/oder TAN- gesteuert ausgebildet sind.

6. Einrichtung (34) zum Bezahlen von Waren bzw. Dienstleistungen (48) mit einem Mobilfunkendgerät (38) über ein Mobilfunknetz (36) nach einem der Ansprüche 1 bis 5, **gekennzeichnet durch** Identifikationsmittel, zum eindeutigen Identifizieren und Authentifizieren des Mobilfunkteilnehmer (16) im Mobilfunknetz (36).

7. Einrichtung (34) zum Bezahlen von Waren bzw. Dienstleistungen (48) mit einem Mobilfunkendgerät (38) über ein Mobilfunknetz (36) nach Anspruch 6, **dadurch gekennzeichnet, dass** die Identifikationsmittel als SIM-Karte ausgebildet sind.

8. Einrichtung (34) zum Bezahlen von Waren bzw. Dienstleistungen (48) mit einem Mobilfunkendgerät (38) über ein Mobilfunknetz (36) nach einem der Ansprüche 1 bis 7, **gekennzeichnet durch** Mittel zum Aktivieren bzw. Deaktivieren des Schwellwertfilters (42).

9. Einrichtung (34) zum Bezahlen von Waren bzw. Dienstleistungen mit einem Mobilfunkendgerät (38) über ein Mobilfunknetz (36) nach Anspruch 8, **dadurch gekennzeichnet, dass** die Mittel zum Aktivieren bzw. Deaktivieren des Schwellwertfilters Code-, vorzugsweise PIN- und/oder TAN- gesteuert ausgebildet sind.

10. Verfahren zum Bezahlen von Waren bzw. Dienstleistungen (48) für einen Mobilfunkteilnehmer (16) mit einem Mobilfunkendgerät (38) über ein Mobilfunknetz (36), wobei der zu bezahlende Geldbetrag und der jeweilige Empfänger (46) über das Mobilfunkendgerät (38) an eine Bezahleinheit (40) des Mobilfunknetzes (36) übermittelt wird, welche den gewünschten Geldbetrag an den Empfänger (46) transferiert **dadurch gekennzeichnet, dass** ein Schwellwert (14) festgelegt wird, bis zu dessen Höhe die Bezahleinheit Geldbeträge transferiert.

11. Verfahren zum Bezahlen von Waren bzw. Dienstleistungen (48) mit einem Mobilfunkendgerät (38) über ein Mobilfunknetz (36) nach Anspruch 10, **dadurch gekennzeichnet, dass** der Schwellwert (14) für jeden Mobilfunkteilnehmer (16) individuell eingestellt wird.

12. Verfahren zum Bezahlen von Waren bzw. Dienstleistungen (48) mit einem Mobilfunkendgerät (38) über ein Mobilfunknetz (36) nach einem der Ansprüche 10. oder 11., **dadurch gekennzeichnet, dass** der Schwellwert (14) auf verschiedene Stufen angehoben bzw. abgesenkt wird.

13. Verfahren zum Bezahlen von Waren bzw. Dienstleistungen (48) mit einem Mobilfunkendgerät (38) über ein Mobilfunknetz (36) nach Anspruch 12, **dadurch gekennzeichnet, dass** der Schwellwert (14) durch eine PIN- und/oder eine TANangepasst wird.
